# EUROPEAN PATENT APPLICATION

(11) **EP 2 355 488 A1**
(43) Date of publication of application: **10.08.2011**
(21) Application number: 09830439.7
(22) Date of filing: 03.12.2009
(51) Int. Cl.: H04N 1/387, H04N 1/00, H04N 1/04

(54) **SCANNER CONTROL DEVICE AND PROGRAM, AND SCANNER SYSTEM**

(30) Priority: 05.12.2008 JP 2008311379
(71) Applicant: Kokuyo Co., Ltd., Osaka 537-8686 (JP); Sekonic Corporation, Tokyo 178-8686 (JP)
(72) Inventor: KAWAI, Shigehiro, Osaka-shi Osaka 537-8686 (JP); JODOI, Tomoko, Osaka-shi Osaka 537-8686 (JP); HORINO, Michioki, Tokyo 178-8686 (JP)
(74) Representative: TBK
(86) International application number: PCT/JP2009/070293
(87) International publication number: WO 2010/064673

(57) **Abstract**

To enhance convenience in using a scanner system that reads both obverse and reverse sides of an object to be read and generates an obverse-side image and a reverse-side image, a scanner control device 1 is configured of an obverse-side image acquisition portion 101 configured to read an obverse side of an object to be read by means of a scanner 2 and acquire an obverse-side image; a reverse-side image acquisition portion 102 configured to read a reverse side of the object to be read by means of the scanner 2 and acquire a reverse-side image; a display controller 103 configured to display, on a screen of a display, an entire image formed of the obverse-side image and the reverse-side image that are arranged horizontally or vertically with a gap therebetween; and a storage controller 104 configured to store, in a predetermined storage device, an entire image as a single piece of image data.

## Description

### TECHNICAL FIELD

The present invention relates to control of a scanner for scanning both obverse and reverse sides of an object to be read.

### BACKGROUND ART

An image scanner that can read both obverse and reverse sides of an object to be read at the same time is well known (see, for example, the patent document listed below). As an application of this type of scanner is, for example, to scan the obverse and reverse sides of a business card, or to pass a large-sized document folded in half through a scanner and scan the entire document at the same time.

When both the obverse and reverse sides of an object to be read are read, an image of the obverse side and an image of the reverse side are individually generated. These obverse-side image and reverse-side image may be stored in a storage device of a computer as separate image files or stored as a plurality of pages of a document file such as in PDF (Portable Document Format).

If the obverse-side image and the reverse-side image are organized as separate image files, it is necessary to manage these files by describing, in the file names or metadata, which of the files and which of the files individually belong to the obverse and reverse sides of a single object to be read, which bothers the user.

Contrary to this, if the obverse-side image and the reverse-side image are organized as a single file, the user is relieved from a trouble of managing the obverse and reverse sides. However, if the user wishes to see both the images of the obverse and reverse sides, it is necessary to perform operation of turning the pages on a required application program that can open such a document file, which also causes a trouble.

### PRIOR-ART DOCUMENT

### PATENT DOCUMENT

Patent Document 1: Japanese Patent Application Laid-Open No. H07-283902

### SUMMARY OF THE INVENTION

### PROBLEM TO BE SOLVED BY THE INVENTION

The present invention is made in view of the foregoing backgrounds, and it is an object of the present invention to enhance convenience in using a scanner system that reads both obverse and reverse sides of an object to be read and generates an obverse-side image and a reverse-side image.

### APPROACH TO SOLVE THE PROBLEMS

According to the present invention, a scanner control device includes an obverse-side image acquisition portion configured to read an obverse side of an object to be read by means of a scanner and acquire an obverse-side image, a reverse-side image acquisition portion configured to read a reverse side of the object to be read by means of the scanner and acquire a reverse-side image, a display controller configured to display, on a screen of a display, an entire image formed of the obverse-side image and the reverse-side image that are arranged horizontally or vertically. The entire image is formed of the obverse-side image and the reverse-side image individually arranged in two virtual frames that are arranged horizontally or vertically.

According to the present invention, since the obverse-side image and the reverse-side image are integrally formed as an entire image, the relationship between the two images is made clear, and both the obverse-side and reverse-side images can be viewed at the same time without performing operation of turning pages.

In addition, the scanner control device includes an obverse-side image acquisition portion configured to read an obverse side of an object to be read by means of a scanner and acquire an obverse-side image, a reverse-side image acquisition portion configured to read a reverse side of the object to be read by means of the scanner and acquire a reverse-side image, and a storage controller configured to store in a predetermined storage device, as a single piece of image data, an entire image formed of the obverse-side image and the reverse-side image individually arranged horizontally or vertically. Accordingly, it is possible to perform a process of generating and storing the entire image by scanning both the obverse and reverse sides of the object to be read.

Further, if a gap with one or more pixels is inserted between an edge of the obverse-side image and an edge of the reverse-side image when the entire image is generated, a deviation does not bother the user visually even if a slight deviation is caused between the obverse-side image and the reverse-side image vertically (when the two images are arranged horizontally) or horizontally (when the two images are arranged vertically). As a result, image processing for correcting the deviation is not necessary.

A document as an object to be read is often white paper. Accordingly, if the gap in the entire image is made white, it is possible to increase a sense of integrity between the area of the obverse-side image and the area of the reverse-side image in the entire image.

### EFFECTS OF THE INVENTION

According to the present invention, it is possible to enhance the convenience in using a scanner system that reads both obverse and reverse sides of an object to be read and generates an obverse-side image and a reverse-side image.

### BRIEF DESCRIPTION OF THE DRAWINGS

[FIG. 1] A diagram illustrating a scanner system according to an embodiment of the present invention.
[FIG. 2] A diagram illustrating hardware resources provided in a scanner according to the embodiment.
[FIG. 3] A diagram illustrating hardware resources provided in a scanner control device according to the embodiment.

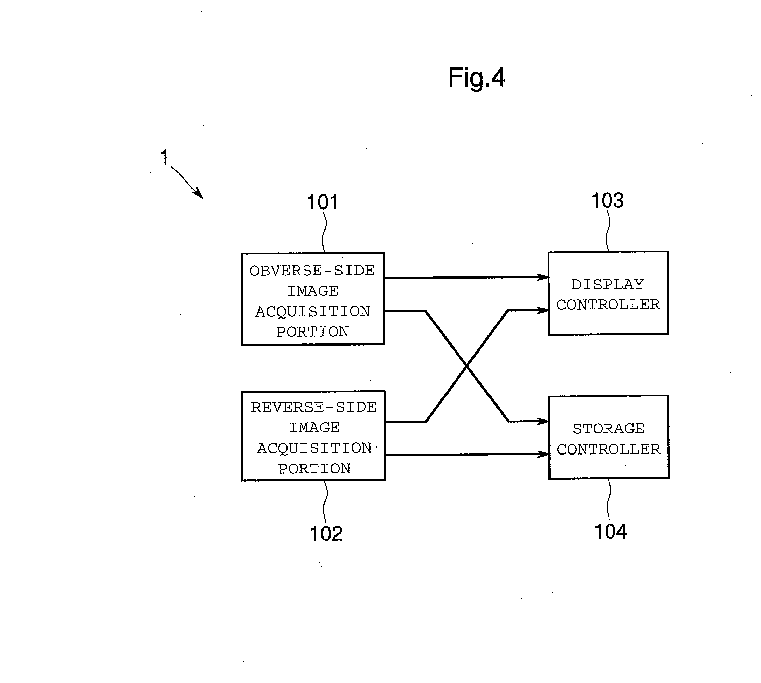

[FIG. 4] A functional block diagram of the scanner control device.
[FIG. 5] A diagram illustrating an example of a user interface display screen of the scanner control device.
[FIG. 6] A diagram illustrating examples of scanned images immediately after the images are obtained from an obverse-side buffer, a reverse-side buffer, and the scanner.
[FIG. 7] A diagram illustrating examples of an obverse-side image and a reverse-side image.
[FIG. 8] A diagram illustrating a working buffer.
[FIG. 9] A diagram illustrating a state in which an overall image is organized by arranging the obverse-side image and the reverse-side image in two virtual frames, respectively.
[FIG. 10] A diagram illustrating an example of screen display of an entire image.
[FIG. 11] A flowchart depicting procedures performed by the scanner control device according to a program.
[FIG. 12] A flowchart depicting procedures performed by the scanner control device according to the program.

### MODES FOR CARRYING OUT THE INVENTION

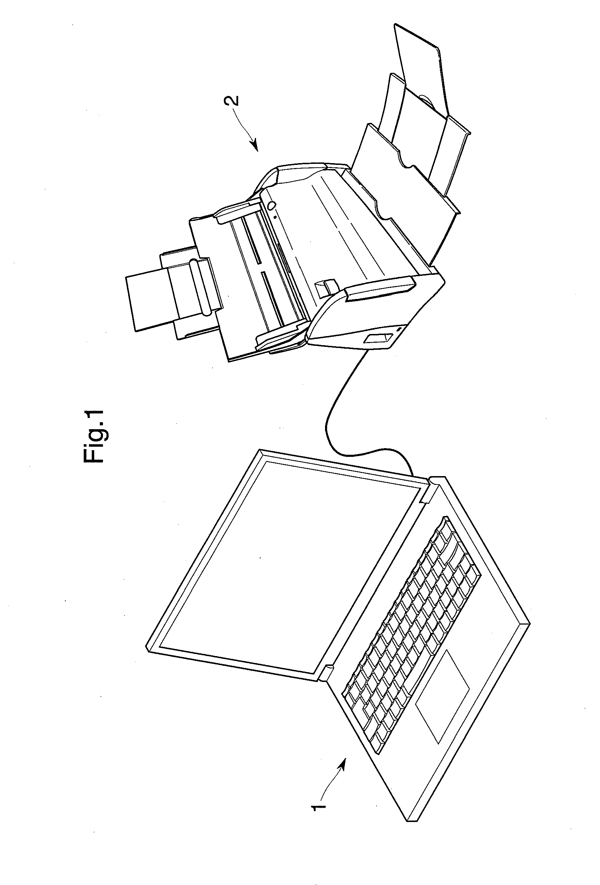

An embodiment of the present invention will be described with reference to the drawings. As illustrated in FIG. 1, a scanner system according to this embodiment is configured of a scanner 2 that can read both obverse and reverse sides of an object to be read at one time and a scanner control device 1 that is connected to the scanner 2 with wire or wirelessly.

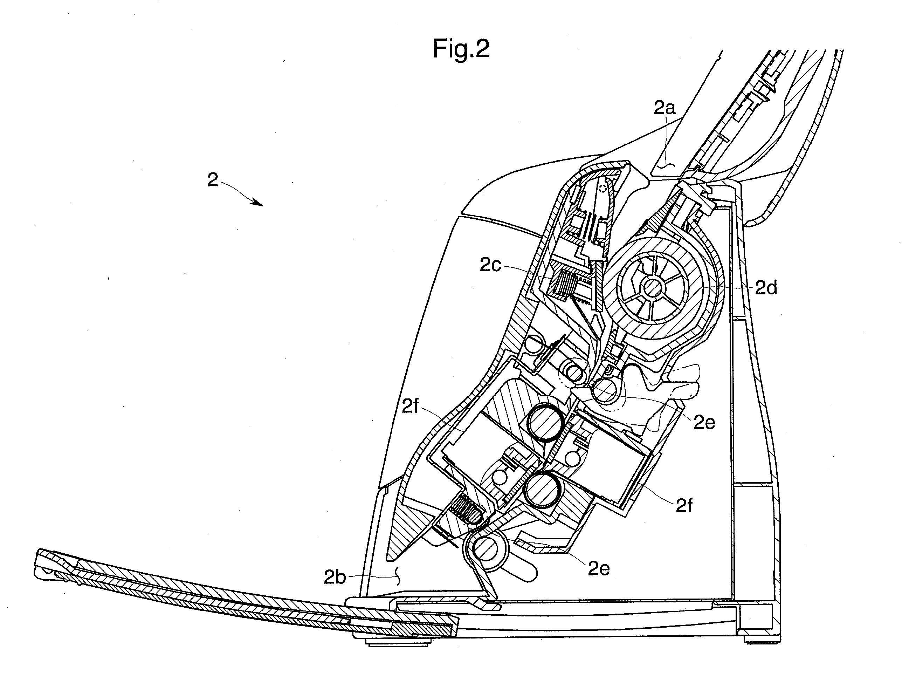

The scanner 2 is a known type that can read both the obverse and reverse sides of the object to be read at one time. Generally stated, as illustrated in FIG. 2, the scanner 2, for example, is provided with a paper feed slot 2a in an upper-rear portion thereof, a paper ejection slot 2b in a front-lower portion thereof, a paper path therein through which the paper feed slot 2a and the paper ejection slot 2b communicate with each other, and a paper feed region, which can receive an object to be read, provided on a side of the paper feed slot 2a in the paper path. In addition, the scanner 2 is also provided, along the paper path, with a sheet separation device 2c that separate front portions of the objects to be read received in the paper feed region, a paper feed device 2d that uses a paper feed roller to pull in, sheet by sheet, the objects to be read separated by the sheet separation device 2c, a transport device 2e that uses a transport roller to transport the object to be read that has been pulled in toward the paper ejection slot 2b, and an image pickup device 2f that takes images on both obverse and reverse sides of the object to be read that is transported. The image pickup device 2f has, as its element, a solid-state image pickup element (image sensor) for obtaining a one-dimensional image by means of an illumination light source for illuminating the object to be read and the photoelectric conversion. In addition, the scanner 2 incorporates therein a control circuit (not illustrated) that controls a motor for rotatably driving the paper feed roller and the transport roller, the illumination light source, the solid-state image pickup element, and the like. The scanner 2 also incorporates therein a communication interface (not illustrated) for performing data communication with the scanner control device 1. USB (Universal Serial Bus), IEEE 1394, a wireless transceiver, or the like can be used as the communication interface.

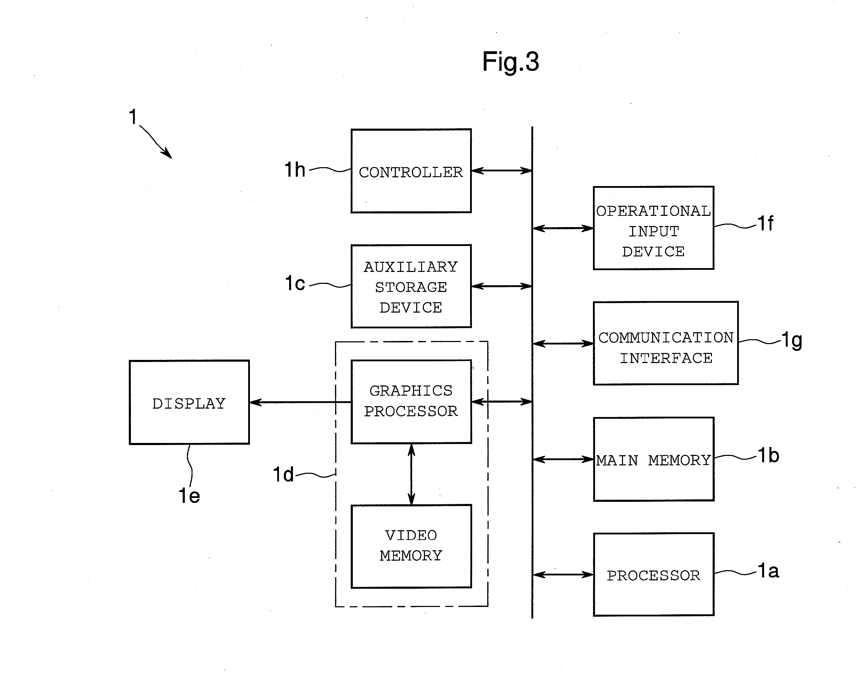

The scanner control device is constituted of a computer 1, as a core, such as the one that is represented by a personal computer. For example, as illustrated in FIG. 3, the computer 1 is provided with hardware resources such as a processor 1a, a main memory 1b, an auxiliary storage device 1c, a display control device 1d, a display 1e, an operational input device 1f, and a communication interface 1g, which are controlled by a system controller, an I/O controller, and the like 1h to work in cooperation with each another. The auxiliary storage device 1c is represented by a device such as a hard disk drive, a flash memory, and an optical disc drive. The display control device 1d includes, as its elements, a graphic processor that generates an image to be displayed based on a draw command received from the processor 1a and transmits the image to the display 1e, and a video memory for temporarily storing the image or the like. The operational input device 1f includes a depressing button that can be operated by a finger such as a keyboard, and a pointing device such as a mouse, a trackpad, or a touch panel. The communication interface 1g is a device that performs data communication with the connected scanner 2.

Usually, a program executed by the processor 1a is stored in the auxiliary storage device 1c. When the program is executed, the program is read from the auxiliary storage device 1c into the main memory 1b and decoded by the processor 1a. In this embodiment, a known GUI (Graphical User Interface) type OS (Operating System) program and various device driver programs associated therewith are preinstalled and act to mediate utilization of the hardware resources by other programs. Based on this, a program required for organizing the scanner control device 1 is installed, activates the hardware resources according to the program, and implements the functions as an obverse-side image acquisition portion 101, a reverse-side image acquisition portion 102, a display controller 103, and a storage controller 104.

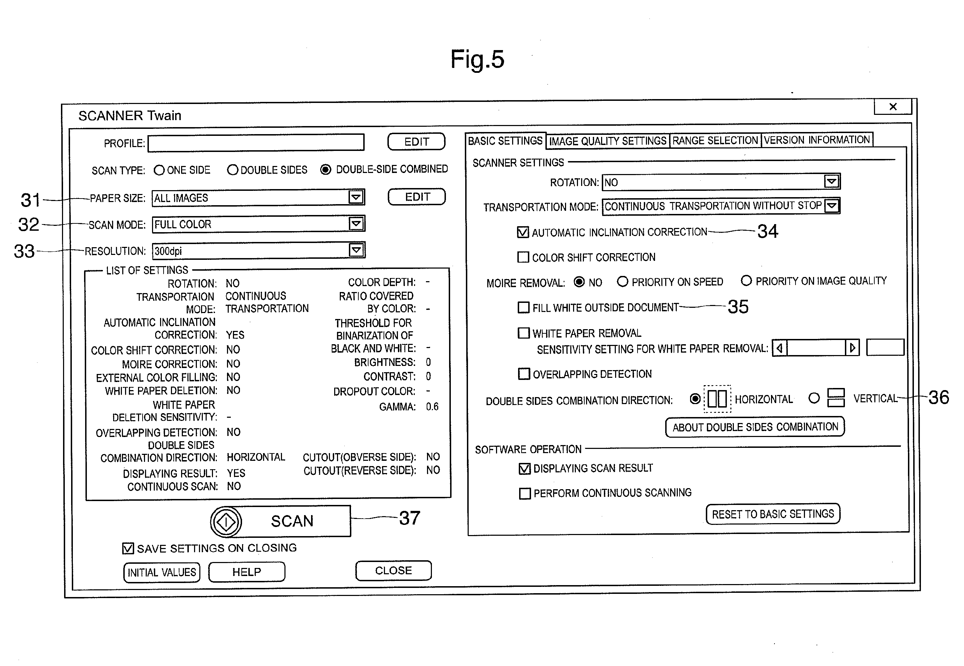

Functions of individual portions will be described in detail. The obverse-side image acquisition portion 101 reads the obverse side of the object to be read by way of the scanner 2 and acquires an obverse-side image 71. The computer 1, according to the program, displays a screen as illustrated in FIG. 5 on the display 1e and waits for an operational input by the user. The user operates the operational input device 1f and inputs various setting information necessary for reading the object to be read and inputs a scan command. For example, information for setting the followings will be entered by clicking on pull-down menus 31, 32, and 33, check boxes 34 and 35, a radio button 36, or the like on the screen.
- Scan type (only the obverse side of the object to be read is scanned to obtain the obverse-side image, both sides are scanned to individually obtain the obverse-side image and the reverse-side image, or both sides are scanned to obtain a combined entire image by laying the obverse-side image and the reverse-side image).
- Paper size (the size of the object to be read.).
- Scan mode (color or monochrome).
- Scanning resolution (image resolution of the obverse-side image, the reverse-side image, or the entire image that is to be obtained).
- Presence or absence of automatic inclination correction (whether image processing is performed to correct the inclination if the object to be read is inclined relative to a horizontal axis or a vertical axis).
- whether to fill in an area outside the document with white (if the scanned image is larger than the object to be read, whether or not a background area in an outer periphery of the object to be read is filled with white pixels).
- Direction in which the images are combined (to obtain the entire image, whether the obverse-side image and the reverse-side image are arranged in a right and left (horizontal) direction or an up and down (vertical) direction).
   In addition, a scan command is given to the computer 1 by clicking a scan command button 37. Upon receiving the scan command, the computer 1 transmits, to the scanner 2, a control command corresponding to the foregoing settings information to thereby control the scanner 2, causes the scanner 2 to scan the obverse side and/or the reverse side of the object to be read, and receives the scanned image. The control command complies with, for example, the specifications of the TWAIN standards.

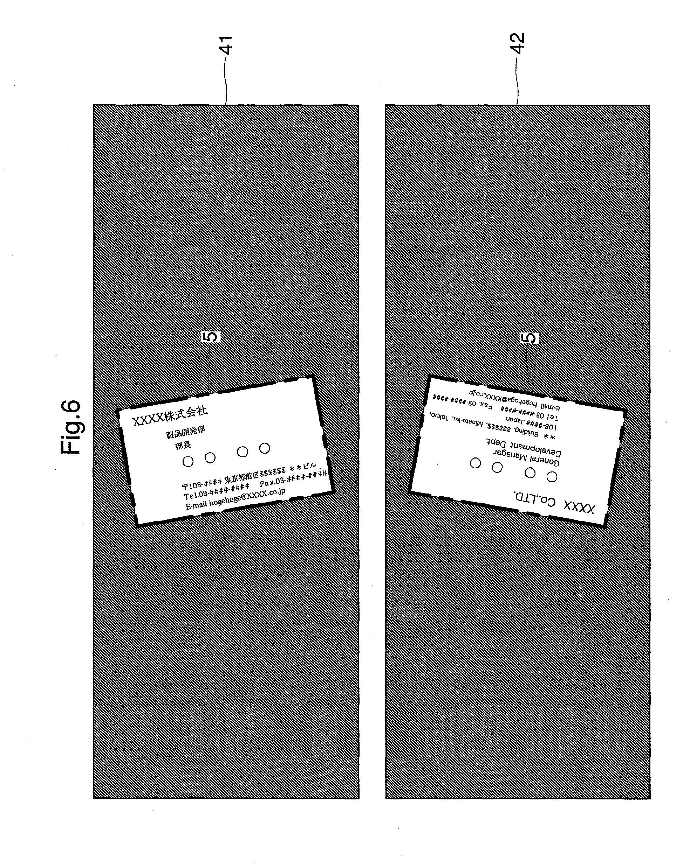

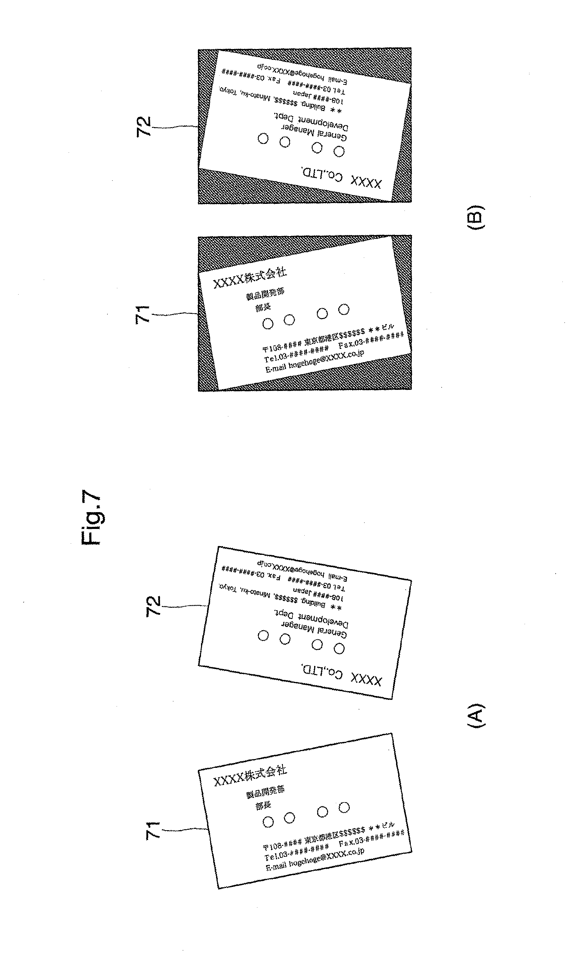

The image received from the scanner 2 is stored in an obverse-side buffer 41 secured in the main memory 1b. Although the size of the buffer depends on the size of the object to be read and the scanning resolution, usually, the size of the buffer is larger than that of the object to be read in the right and left width as well as the up and down height as shown in FIG. 6. The image immediately after it is received from the scanner 2 also includes a background area which is not present in the object to be read. The background area is formed of black pixels. The computer 1, in accordance with the program, cuts out an image of the object to be read itself excluding the background area from the image including the background area. For example, the computer 1 detects a border 5 from which a pixel value changes from black to a color (particularly, white) of paper of the object to be read and cuts out images 71 and 72 (illustrated in FIG. 7(A)) inside the border 5, or alternatively cuts out rectangular images (illustrated in FIG. 7(B)) 71 and 72 enclosing the border 5. In addition, if required, inclinations of the images 71 and 72 thus cut out are corrected, and/or the background areas included in the images 71 and 72 thus cut out are replaced with white pixels. Through this process, the obverse-side image 71 is acquired.

The reverse-side image acquisition portion 102 reads the reverse side of the object to be read by means of the scanner 2 and acquires the reverse-side image 72 thereof. The function of the reverse-side image acquisition portion 102 is similar to that of the obverse-side image acquisition portion 101 except the difference that the image to be acquired is the reverse-side image 72 instead of the obverse-side image 71. To be specific, the image received from the scanner 2 is stored in a reverse-side buffer 42 secured in the main memory 1b, and the image 72 of the object to be read itself is cut out therefrom In addition, if required, the inclination is corrected or the backgrounds are filled in with white pixels. The number of pixels in the vertical size and the number of pixels in the horizontal size of the reverse-side image 72 are same as those of the obverse-side image 71.

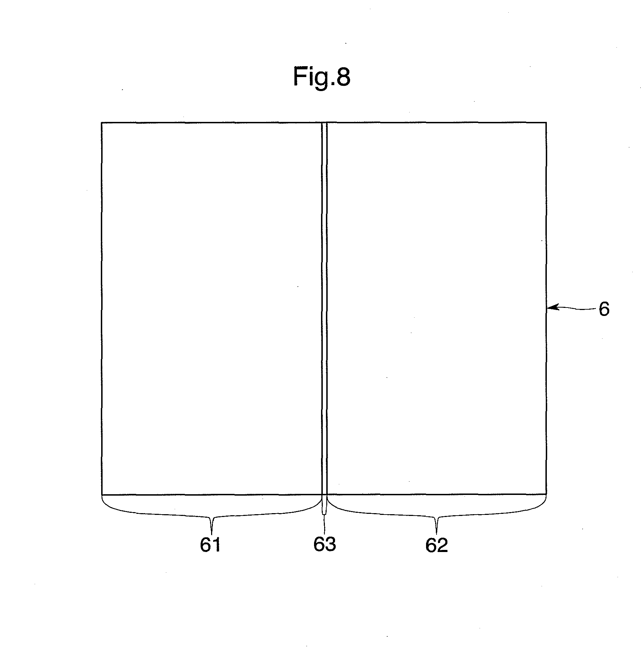

The display controller 103 displays, on the display 1e, the entire image 7 by arranging the obverse-side image 71 and the reverse-side image 72 thus acquired in a horizontal direction or a vertical direction. It is the user's designation as described above that decides whether the two images 71 and 72 are arranged in the horizontal direction or the vertical direction. The computer 1, according to the program, secures a working buffer 6 in the main memory 1b according to sizes of the obtained obverse-side image 71 and the obtained reverse-side image 72. The working buffer 6 is a so-called virtual frame in which the obverse-side image and the reverse-side image are stored. As illustrated in FIG. 8, a region 63 is provided as a gap between two frames 61 and 62 so that the gap has a size of one pixel or more. For example, a pixel value 73 of white color is filled in this region 63 as the gap. The size of the gap 73, stated differently, the number of pixels between the obverse-side image 71 and the reverse-side image 72, depends on the scanning resolution. The gap 73 corresponds to a thickness of a document when a large-sized document is folded in half and is passed in the scanner 2.

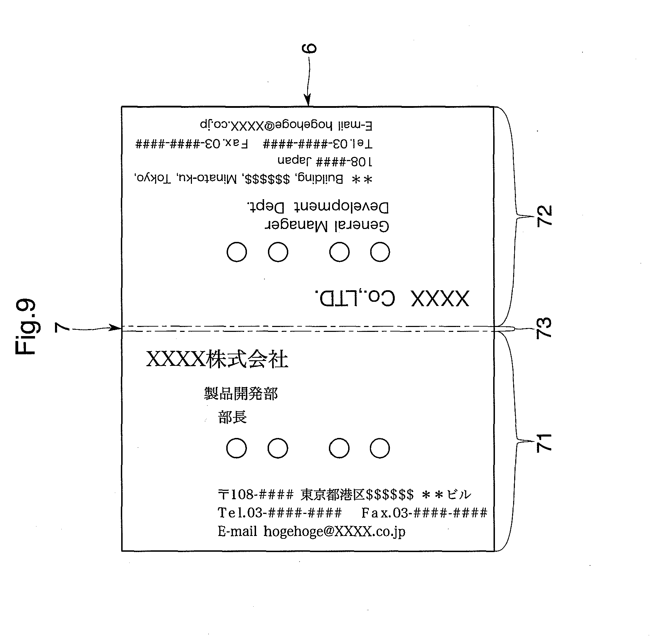

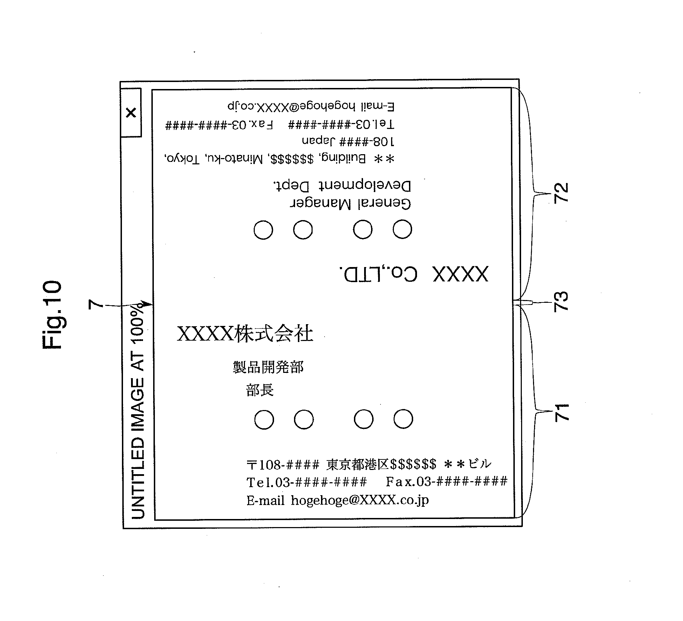

In this way, as illustrated in FIG. 9, the computer 1 transfers the obverse-side image 71 from the obverse-side buffer 41 to the one-side region 61 of the working buffer 6 and the reverse-side image 72 from the reverse-side buffer 42 to the other-side region 62 of the working buffer 6. This means that the obverse-side image 71 and the reverse-side image 72 are placed in the two virtual frames 61 and 62, respectively, that are arranged in the horizontal direction or the vertical direction. As already described, the obverse-side image 71 and the reverse-side image 72 have the identical number of pixels in the vertical size and the identical number of pixels in the horizontal size. Accordingly, there is no need to apply a positional adjustment (vertical positioning when both are horizontally arranged, or vertical positioning when both are vertically arranged) of the reverse-side image 72 relative to the obverse-side image 71. With this arrangement, the entire image 7 is generated in the working buffer 6. Subsequent to this, the obverse-side buffer 41 and the reverse-side buffer 42 which will not be required any more are deleted. Then, as exemplified in FIG. 10, the entire image 7 in the working buffer 6 is displayed on the screen of the display 1e.

The storage controller 104 stores, as a single piece of image data, the entire image 7 formed of the acquired obverse-side image 71 and reverse-side image 72 which are arranged either horizontally or vertically in the main memory 1b or the auxiliary storage device 1c both of which serving as storage devices. To state it differently, the entire image 7 in the working buffer 6 is stored in the auxiliary storage device 1c as an image file or in the main memory 1b temporarily, and the entire image 7 will be passed to the other application program.

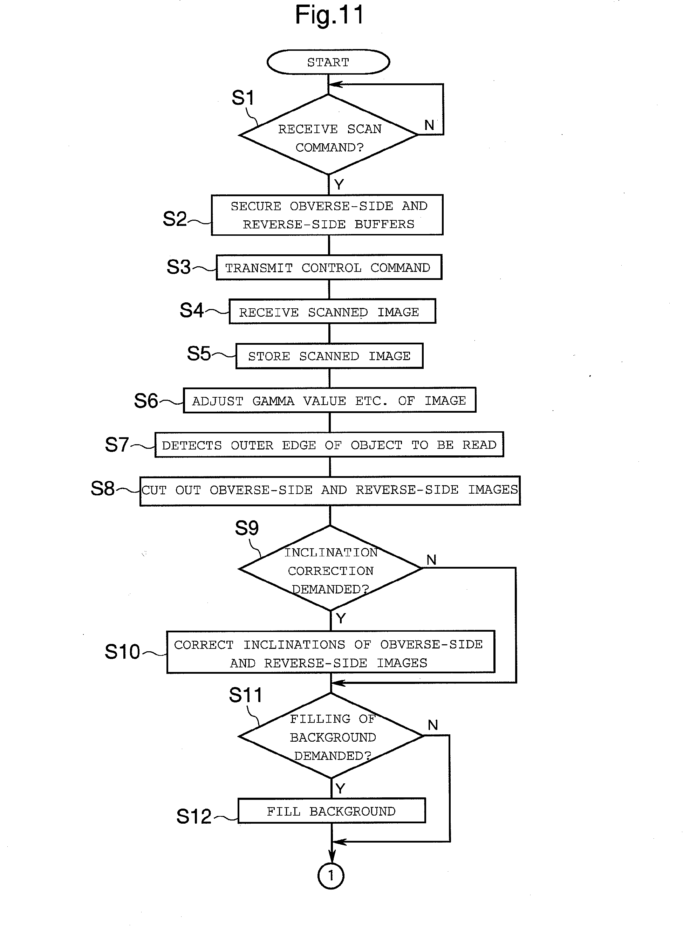

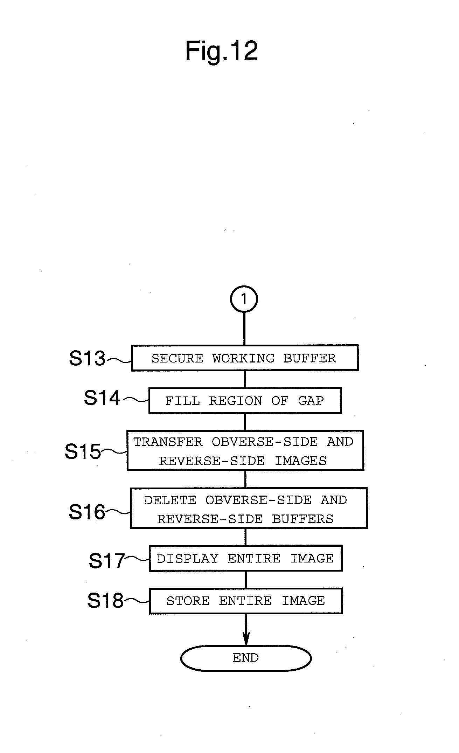

FIGs. 11 and 12 depict the procedures of scanning process performed by the computer 1 serving as the scanner control device. Upon receiving a scan command entered through the user's hand (step S1), the computer 1 secures the obverse-side buffer 41 and the reverse-side buffer 42 (step S2), transmits a control command to the scanner 2 (step S3), and causes the scanner 2 to perform scanning of the object to be read. Then, the computer 1 receives the images of the obverse and reverse sides read by the scanner 2 (step S4), and stores the images in the obverse side buffer 41 and the reverse-side buffer 42 (step S5), respectively.

The computer 1, in accordance with the settings information designated by the user in advance, performs adjustments such as gamma, brightness, and contrast adjustments on the scanned images stored in the obverse-side buffer 41 and the reverse-side buffer 42 (step S6). Subsequently, the computer 1 detects the border 5 between the object to be read and the background in the scanned images (step S7), and cuts out rectangular images 71 and 72 including the object to be read (step S8). If necessary, the computer 1 performs inclination correction on the images 71 and 72 thus cut out (steps S9 and S10), and fills in the background area included in the images 71 and 72 thus cut out with white pixels (steps S11 and S12). The processes in steps S6 to S12 are performed individually on the obverse-side image 71 and the reverse-side image 72.

Thereafter, the working buffer 6 that includes the two frames 61 and 62 that are arranged horizontally or vertically and the gap 63 therebetween is secured (step S13), the region 63 of the gap is filled with white pixels 73 (step S14), thereafter the obverse-side image 71 is transferred from the obverse-side buffer 41 to one frame 61, and the reverse-side image 72 is transferred from the reverse-side buffer 42 to the other frame 62 (step S15). Then, the obverse-side buffer 41 and the reverse-side buffer 42 that become unnecessary are deleted (step S16).

The computer 1 displays the entire image 7 stored in the working buffer 6 on the screen of the display 1e (step S17). In addition, the entire image 7 stored in the working buffer 6 is stored in the auxiliary storage device 1c as a single image file or is stored in the main memory 1b temporarily (step S18). Both of the steps S17 and 18 may be performed, or alternatively only one of them may be performed.

According to this embodiment, the scanner control device 1 is configured of the obverse-side image acquisition portion 101 that reads the obverse side of the object to be read by means of the scanner 2 and acquires the obverse-side image 71, the reverse-side image acquisition portion 102 that reads the reverse side of the object to be read by means of the scanner 2 and acquires the reverse-side image 72, and the display controller 103 that causes the display 1e to display, on the screen thereof, the entire image 7 formed by arranging the obverse-side image 71 and the reverse-side image 72 in the virtual frames 61 and 62, respectively, that are arranged horizontally or vertically. Accordingly, the relationship between the obverse-side image 71 and the reverse-side image 72 is made clear, and both the obverse-side and reverse-side images can be viewed at the same time by the user without performing operation of turning pages.

In addition, the scanner control device 1 is further configured of the obverse-side image acquisition portion 101 that reads the obverse side of the object to be read by means of the scanner 2 and acquires the obverse-side image 71, the reverse-side image acquisition portion 102 that reads the reverse side of the object to be read by means of the scanner 2 and acquires the reverse-side image 72, and the storage controller 104 that stores, as a single piece of image data, the entire image 7 which is formed of the obverse-side image 71 and the reverse-side image 72 arranged either horizontally or vertically in the predetermined storage devices 1b and 1c. Therefore, it is possible to perform a process of generating the entire image 7 by scanning the obverse and reverse sides of the object to be read, passing the entire image 7 to the other application program, or storing a file of the entire image 7.

Then, the gap 73 with one or more pixels is inserted between the obverse-side image 71 and the reverse-side image 72 of the entire image 7. Accordingly, even if a slight deviation is caused between the obverse-side image 71 and the reverse-side image 72 vertically (when the two images are arranged horizontally) or horizontally (when the two images are arranged vertically), the deviation does not bother the user visually and, as a result, does not require image processing for correcting the deviation.

Since the gap 73 of the entire image 7 is filled with white pixels, it is possible to increase a sense of integrity between the area of the obverse-side image 71 and the area of the reverse-side image 72 in the entire image 7.

The present invention is not restricted to the embodiment described above in detail. In the embodiment, although the size of the gap, i.e., the distance, between the area of the obverse-side image and the area of the reverse-side image is made constant, the gap may be varied according to the scanning resolution.

The size of the gap or the number of pixels in the gap may be varied according to the size of the object to be read. For example, the gap or the number of pixels may be made larger as the object to be read is larger. In this way, the layout balance of the obverse-side image and the reverse-side image in the entire image becomes better.

The pixels filled in the gap are not restricted to white color. Gray or other arbitrary background color, or transparent pixels may be used. It is also possible to detect a pixel value of the paper (periphery portion etc.) on obverse and reverse sides of the object to be read, and fill in the gap with a color having the detected pixel value.

Further, although the scanner and the scanner control device are separately provided in the embodiment described above, these devices may be integrated as one in the embodiment.

The invention is not limited to the specific structures of the individual portions or the processing procedures in the embodiment, and it should be understood that the various changes could be made hereto without departing from the spirit of the invention.

### INDUSTRIAL APPLICABILITY

The present invention is applicable to a scanner that scans both obverse and reverse sides of an object to be read.

### EXPLANATION OF REFERENCE NUMERALS

1 Computer (Scanner control device)
101 Obverse-side image acquisition portion
102 Reverse-side image acquisition portion
103 Display controller
104 Storage controller
2 Scanner
61, 62 Virtual frame
7 Entire image
71 Obverse-side image
72 Reverse-side image
73 Gap

## Claims

1. A scanner control device comprising:
an obverse-side image acquisition portion configured to read an obverse side of an object to be read by means of a scanner and acquire an obverse-side image;
a reverse-side image acquisition portion configured to read a reverse side of the object to be read by means of the scanner and acquire a reverse-side image; and
a display controller configured to display, on a screen of a display, an entire image formed of the obverse-side image and the reverse-side image individually arranged in two virtual frames that are arranged horizontally or vertically.

2. A scanner control device comprising:
an obverse-side image acquisition portion configured to read an obverse side of an object to be read by means of a scanner and acquire an obverse-side image;
a reverse-side image acquisition portion configured to read a reverse side of the object to be read by means of the scanner and acquire a reverse-side image; and
a storage controller configured to store in a predetermined storage device, as a single piece of image data, an entire image formed of the obverse-side image and the reverse-side image individually arranged in two virtual frames that are arranged horizontally or vertically.

3. The scanner control device according to claim 1 or 2,
wherein a gap of one or more pixels is provided between the obverse-side image and the reverse-side image in the entire image.

4. A program used to configure the scanner control device according to claim 1, the program causing a computer to implement:
an obverse-side image acquisition portion configured to read an obverse side of an object to be read by means of a scanner and acquire an obverse-side image;
a reverse-side image acquisition portion configured to read a reverse side of the object to be read by means of the scanner and acquire a reverse-side image; and
a display controller configured to display, on a screen of a display, an entire image formed of the obverse-side image and the reverse-side image individually arranged in two virtual frames that are arranged horizontally or vertically.

5. A program used to configure the scanner control device according to claim 2, the program causing a computer to implement:
an obverse-side image acquisition portion configured to read an obverse side of an object to be read by means of a scanner and acquire an obverse-side image;
a reverse-side image acquisition portion configured to read a reverse side of the object to be read by means of the scanner and acquire a reverse-side image; and
a storage controller configured to store in a predetermined storage device, as a single piece of image file, an entire image formed of the obverse-side image and the reverse-side image individually arranged in two virtual frames that are arranged horizontally or vertically.

6. The program according to claim 4 or 5,
wherein a gap of one or more pixels is provided between the obverse-side image and the reverse-side image in the entire image.

7. A scanner system comprising:
the scanner control device according to any one of claims 1, 2, and 3; and
a scanner that can read both obverse and reverse sides of an object to be read at one time.

8. A scanner system comprising:
the program according to any one of claims 4, 5, and 6; and
a scanner that can read both obverse and reverse sides of an object to be read at one time.
